(19) Europäisches Patentamt
European Patent Office
Office européen des brevets

(11) Publication number: **0 245 633 B1**

# (12) EUROPEAN PATENT SPECIFICATION

(45) Date of publication of patent specification: **21.10.92**

(51) Int. Cl.[5]: **C08G 16/02**, C08G 16/00, B01F 17/12

(21) Application number: **87104677.7**

(22) Date of filing: **30.03.87**

## (54) Condensation products from formaldehyde and sulphonated phenyl-indanes and their salts, process for their preparation and their use as suspending agents.

(30) Priority: **17.04.86 IT 2012086**

(43) Date of publication of application:
**19.11.87 Bulletin 87/47**

(45) Publication of the grant of the patent:
**21.10.92 Bulletin 92/43**

(84) Designated Contracting States:
**AT BE CH DE ES FR GB GR IT LI LU NL SE**

(56) References cited:
**DD-A- 209 838**
**DE-B- 1 719 417**
**US-A- 3 277 162**

(73) Proprietor: **Enichem Anic S.r.l.**
**Via Ruggero Settimo 55**
**I-90139 Palermo(IT)**

(72) Inventor: **Messina, Giuseppe**
**Via Perpignan, 27 Alghero**
**Sassari(IT)**
Inventor: **Moretti, Mario Domenico**
**Via Oriani**
**Sassari(IT)**
Inventor: **Cabras, Pier Gianni**
**Via Dei Mille, 53**
**Sassari(IT)**

(74) Representative: **Cioni, Carlo et al**
**c/o ENIRICERCHE S.p.A. BRELID Via F. Maritano 26**
**I-20097 San Donato Milanese(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to novel condensation products from sulphonated phenyl-indanes and formaldehyde, their salts with organic or inorganic bases, the process for their preparation and their use as stabilising and viscosity controlling agents for aqueous suspensions. More particularly the invention relates, according to a first aspect, to the products obtained by condensing a sulphonated phenyl-indane of formula I

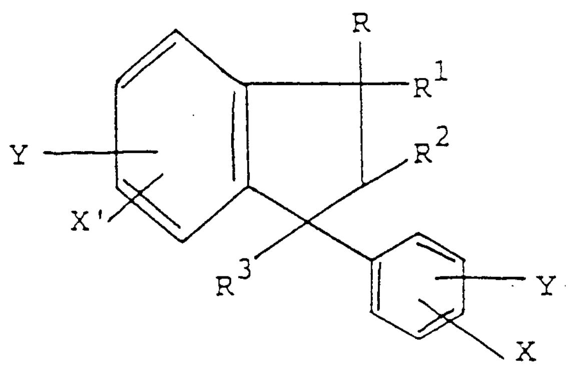

I

wherein

| | |
|---|---|
| R, $R^1$, $R^2$, and $R^3$, | each independently, represent a hydrogen atom or a lower alkyl radical, |
| Y | represents a hydrogen atom or a $C_1$-$C_6$ alkyl, $C_1$-$C_6$ alkoxy, halo, cyano, nitro, $-CF_3$, -COOH, or -COO( $C_1$-$C_6$ alkyl) radical, and |
| X and X', | each independently, represent a hydrogen atom or a $-SO_3H$ group, with the proviso that at least one of X and X' is a $-SO_3H$ group, |

with formaldehyde or a formaldehyde donor.

For the purposes of the present invention, the term "$C_1$-$C_6$ alkyl" designates a straight or branched alkyl radical containing from 1 to 6 carbon atoms, while the term "$C_1$-$C_6$ alkoxy" identifies a straight or branched alkoxy radical of from 1 to 6 carbon atoms.

The term "formaldehyde donor" identifies the formaldehyde polymeric structures, such as 1,3,5-trioxane or paraformaldehyde, which in acidic media depolimerize readily to monomeric formaldehyde.

Condensation of the sulphonated phenyl-indanes of formula (I) with formaldehyde yields condensation products wherein two or more sulphonated aromatic structures are linked through a methylene group.

In the actual practice, the condensation reaction is carried out by contacting almost equimolecular amounts of the reaction partners in the presence of a solvent or a solvent mixture which does not interfere with the condensation reaction, and of small amounts of a mineral acid. The solvent of election for the condensation reaction of the present invention is water, but polar and inert organic solvents such as, for instance, dimethylsulfoxide, chloroform, carbon tetrachloride, ethylene dichloride, may as well be employed in this reaction. The use of water as the reaction solvent, besides the advantages of being economically convenient and industrially safe, makes a closer control of the reaction possible, the reaction being otherwise highly exothermic, and makes it possible, furthermore, to add formaldehyde in the form of formalin i.e. a commercially available formaldehyde aqueous solution. Furthermore, for the intended use of the basic salts of the condensation products, as stabilisers and viscosity controlling agents for aqueous suspensions, a further advantage of using water as the reaction solvent, is that it is not necessary to remove it on completion of the reaction.

The reaction is carried out in the presence of a mineral acid, which is generally selected from the conventional ones i.e. sulfuric acid, phosphoric acid and hydrochloric acid, sulfuric acid being preferably employed.

Amounts of the selected mineral acid comprised between 0,1 % and 20 %, by weight, relative to the starting sulphonated phenyl-indane, can conveniently be used, and preferably, between 0.1 and 10 %.

The reaction is generally carried out at a temperature comprised between room temperature and the reflux temperature of the reaction mixture.

The optimum temperature for the condensation reaction is, however, a function of the solvent and the formaldehyde reactant employed.

Whenever, according to a preferred embodiment of the present invention, the condensation reaction is

carried out by adding a formaldehyde aqueous solution to the sulphonated phenyl-indane, then, preferably, the reaction mixture is heated to the reflux temperature, whereas, when a solution of paraformaldehyde in an inert organic solvent is used, the reaction is more advantageously carried out under mild and controlled conditions, by gradually adding the paraformaldehyde solution to the sulphonated phenyl-indane and keeping the temperature of the reaction mixture at 20-30 °C.

The reaction time will be a function of properly selected reaction parameters, such as temperature, solvent or solvent mixture and reactants.

It has been ascertained, however, that a few hours, typically from 2 h to 10 h, are generally sufficient to complete the reaction.

The condensation products, thus obtained, are then neutralised by the addition of organic or inorganic bases.-Suitable organic bases which may be used in the neutralisation step are for instance aliphatic amines such as mono-, di-, or tri-alkyl- or alkanol-amines e.g. isopropylamine, diethylamine, triethylamine, triethanolamine, while suitable inorganic bases are, for instance, alkali metal, in particular sodium and potassium, or alkaline-earth metal, such as calcium or magnesium, hydroxides or carbonates, and ammonium hydroxide.

A further subject matter of the present invention consists of the ammonium, substituted ammonium, alkali metal, or alkaline-earth metal salts of the condensation products of a sulphonated phenyl-indane of formula (I) with formaldehyde.

The neutralised condensation products, from which the reactional organic solvent, if any, has been evaporated off, are then diluted with water to the desired concentration.

The aqueous solutions thus obtained, when added in small amounts to suspensions of solids in water or aqueous solutions, displayed very good viscosity-controlling and stabilising properties, and are therefore useful as additives for such suspensions in different technical fields. Among the different applications of the new products which are immediately apparent to anyone skilled in the art in view of their properties, there are, for instance, the use of the novel compounds as suspending agents in the cement and concrete field and in the paint field and - of particular interest - their use as stabilising and viscosity-controlling agents in the highly concentrated suspensions of coal or coal-like products in water.

The use of coal-water slurries to replace fuel oil for many industrial purposes and for steam production is attractive on economic grounds and is rapidly increasing.

For the sake of clarity, reference will be had hereinafter to the use of the new additives in coal-water slurries.

It is understood, however, that one of the subject matters of the present invention is the use of the novel products as suspending and stabilising agents in any type of aqueous suspension.

As it is known, the reduced availability and the increased cost of fuel oil, have raised a keen interest in the use of coal and solid fuels of hydrocarbonaceous origin, such as petroleum coke. However, the use of dry coal powders in combustors designed to operate with liquid fuels is not easily conceivable for many reasons. The use of coal-water slurries in combustion facilities operating with liquid fuels, on the other hand, can be practiced because of their versatility in storage, handling and combustion. Furthermore, coal-water slurries might be used to overcome problems connected with the use of dry coal powders in the specially designed combustion facilities: these problems are air pollution and storage space at a premium, to mention but a few.

An ideal slurry should have a high concentration of solids ( higher than 60%, by weight, of coal), should have particles or aggregates of particles small enough to burn out completely, should flow relatively easily and should not settle out during storage, pumping or pump stops.

There are therefore two critical aspects in the preparation of coal-water slurries. One is the particle size (or the particle size distribution) of the coal particles and the other is the use of chemical additives which are required to attain an optimum behaviour.

Said additives, generally employed in very small amounts, are mainly used to avoid coal particles agglomeration and to control the flow of the slurry and settling, thus rendering the slurry pumpable to convey it through a pipeline.

The best known chemical additives which, as reported by the literature, behave as surface-active agents, are sodium and calcium ligninsulphonates, the sodium salts of the condensation products of naphthalenesulphonic acid with formaldehyde, the sodium salts of polystyrenesulphonic acids, sodium polyacrylates and the like.

Most preferred are the polycondensation products of naphthalenesulphonates with formaldehyde because of the best performances (R.W. Sparks, E.W. Sawyer - Fourth International Symposium on Coal Slurry Combustion - May 10-12, 1982 - Orlando - U.S.A.).

These compounds, even though closely controlling the viscosity of coal-water slurries, do not improve

their stability to a degree so that in such suspensions gelling agents are also present included. In their turn, these gelling agents, while improving coal-water slurry stability, greatly increase slurry viscosity.

It has now surprisingly been found that the organic and inorganic salts of the condensation products from sulphonated phenyl-indanes and formaldehyde, when added in a concentration of 0,2 % by weight or higher to coal-water or coke-water slurries, show, concurrently with considerable slurrying, akin to those obtainable with the best conventional suspending agents, a substantially improved stability.

Optimum results, evaluated in terms of flow and sedimentation behaviour, have been obtained with coal or coke-water slurries containing from 0,2 % to 2 % by weight, and preferably from 0,2 to 1 % by weight, of a salt of the condensation product of a sulphonated phenyl-indane (I) with formaldehyde.

It is therefore a still further object of the present invention, to provide a fluidifying and stabilising additive for suspensions of solids in water, or aqueous solutions which consists of a properly salified condensation product of a sulphonated phenyl-indane of formula (I) with formaldehyde.

For the use as suspending agents, a preferred group of compounds comprises the alkali metal and ammonium salts of the condensation products from the monosulphonated phenyl-indanes of formula (I) where R, $R^1$, $R^2$, $R^3$, and Y are as defined above, one of X and X' is a $-SO_3H$ group, and the other is a hydrogen atom, and formaldehyde.

A most preferred group of compounds comprises the sodium and ammonium salts of the condensation products from the monosulphonated derivatives of 1-methyl-3-phenyl-indane, and 1,1,3-trimethyl-3-phenyl-indane.

Both 1-methyl-3-phenyl-indane, and 1,1,3-trimethyl-3-phenyl-indane, in fact, can be easily obtained by an acid-catalyzed dimerization of styrene and $\alpha$-methyl-styrene, respectively.

These compounds, in their turn, are converted into the corresponding sulphonated derivatives by means of the conventional sulphonating agents such as sulfuric acid and chlorosulphonic acid, to cite but a few.

When sulfuric acid is employed, the sulphonation product actually consists of a mixture of mono-sulphonated and di-sulphonated derivatives and unreacted phenyl-indane. Using nearly equimolar amounts of $H_2SO_4$ and phenyl-indane substrate, for instance, a mixture is obtained consisting of 50-55 % of mono-sulphonated products; 10-15 % of di-sulphonated products; 15-20 % of unreacted phenyl-indane; 5-10 % of $H_2SO_4$ and water.

It is also possible, however, to use chlorosulphonic acid, whereby mono-sulphonated derivatives are prevailingly obtained, or, preferably, $SO_3$.

The reaction is generally carried out under the conditions which are conventionally employed in sulphonation reactions. However, when, according to a preferred embodiment, $SO_3$ is used as the sulphonating agent, the reaction is carried out, according to the teachings of the Italian patent application 19891 A/86, at a temperature preferably comprised between 30° C and 70 ° C, with or without a solvent, and employing air-diluted $SO_3$ (2%-10 % by wt.) which is bubbled through the compound to be sulphonated, or a solution thereof in a suitable solvent, with vigorous stirring. By operating according to the above teachings, a sulphonation product, mainly consisting of a mixture of mono-sulphonated derivatives( > 90%), can be obtained.

For the uses of the sulphonation product provided for by the present invention, it is not necessary to convert the starting phenyl-indane into sulphonated phenyl-indane in its entirety, since the presence of the starting compound (up to 30 % wt. of the starting compound) does not hinder the condensation step. Contrarywise, it has been ascertained that the compositions based on a suspending agent, obtained according to the present invention, and which is a sulphonation product in which the starting phenyl-indane is not entirely sulphonated, afford the best results.

The sulphonation products, irrespective of their preparation, are subsequently used as such in the next condensation step.

The condensation step requires the presence of a free mineral acid, in amounts comprised between 0,1% and 20 % wt. of the sulphonated product.

As the sulphonation products obtained by sulphonation with $H_2SO_4$ always contain free sulfuric acid, the further addition of a mineral acid can be avoided or the required amount of acid reduced. When, instead, sulphonation products obtained through sulphonation with $SO_3$ are used, which do not contain any free $H_2SO_4$, the addition of a mineral acid, as seen above, in appropriate proportions is required.

The following examples illustrate a few significant embodiments of the present invention.

In the examples all the slurries were prepared by charging weighed amounts of coal and of water into a household blender, and then blended at a standard speed for a standard time, as described in the Example 1 hereof.

Example 1

1,1,3-trimethyl-3-phenyl-indane (188.5 g) is charged to a glass cylindrical reaction vessel, equipped with a mechanical stirrer, a thermometer and an inlet tube. The reaction mixture is held at the controlled temperature of 60°C and stirred at 1500 rpm while a 3.5% by volume of $SO_3$ with air is bubbled through the reaction mixture for 45 minutes (corresponding to 90 g/h of $SO_3$).

To the mixture thus obtained, consisting of :

- 81 % wt. mono-sulphonated products;
- 2 % wt. di-sulphonated products; and
- 17 % wt. 1,1,3-trimethyl-3-phenyl-indane,

37 % aqueous formaldehyde (76,6 g) and 96 % $H_2SO_4$ (28,1 g) are then added.

The reaction mixture is heated, with stirring, to the reflux temperature for 5 hours, then is neutralised by the addition of NaOH, and diluted with water up to a 10 % wt. solution of the neutralised condensation product.

This solution is used in the preparation of 70 % coke slurries, according to the following procedure : coke (50 g), consisting, by 65 %, of a powder with a particle size in the range 45 to 250 microns, and, by the 35 % left, of a powder with a particle size comprised between 0.5 and 20 microns, is charged into a 300-ml beaker. Water (17.8 g) and a 10 % solution of the above neutralised condensation product are added thereto so as to provide a slurry containing 0,5 % of the additive. Upon stirring at 1200 rpm for 2 min., a slurry is obtained whose viscosity is determined by means of a Rheomat-30 (Registered Trademark) viscometer coupled to MSC (a cup with an internal diameter = 19,8mm.). Dynamic viscosity at a shear-rate of 100 $sec^{-1}$ is 0,406 $Ns/m^2$.

Example 2

A condensation product prepared as described in example 1 is neutralised with 32 % aqueous ammonia.

The mixture is diluted with water up to a 10 % wt. solution of the neutralised condensation product which is used as suspending additive in the preparation of 70 % coke-water slurries according to the procedure described in example 1.

The dynamic viscosity of the obtained slurries at a shear-rate of 100 $sec^{-1}$ is as follows :

- 0,427 $Ns/m^2$ for the slurry containing 0,5 % wt. of the ammonium salt of the condensation product;
- 0,536 $Ns/m^2$ for the slurry containing 0,3 % wt. of the additive.

Example 3

1,1,3-trimethyl-3-phenyl-indane (312 g) is charged into the reaction vessel of example 1. The temperature is brought to 60°C and the mixture is stirred at 1500 rpm. A stream of air containing 3,5% vol. of $SO_3$ is passed trough the mixture for 45 minutes, corresponding to 90 g/h of $SO_3$. Stirring is raised to 1800 rpm and the temperature is brought to 70°C, still passing the $SO_3$/air stream for 25 additional minutes. A mixture is obtained consisting of:

- 91% wt. mono-sulphonated products;
- 3.5% wt. di-sulphonated products;
- 5.5% wt. 1,1,3-trimethyl-3-phenyl-indane,

and 37 % aqueous formaldehyde (124.7 g) and 96 % $H_2SO_4$ (5.5 g) are then added thereto. The mixture is heated, under stirring, to the reflux temperature for 5 hours; then it is neutralised by the addition of NaOH and diluted with water up to a concentration of the neutralised condensation product of 10 % wt. This solution is employed as suspending additive in the preparation of 70 % coke-water slurries according to the procedure described in example 1, obtaining the following viscosities at a shear-rate of 100 $sec^{-1}$ :

- 0,397 $Ns/m^2$ for the slurry containing 0,5 % of the sodium salt of the condensation product;
- 0,610 $Ns/m^2$ for the slurry containing 0,3 % of the additive.

Example 4

1,1,3-trimethyl-3-phenyl-indane (767 g) is charged into a jacketed glass reactor equipped with a turbine stirrer, a thermometer and an inlet tube. The reaction mixture is thermostatically controlled to 60°C and stirred at 1200 rpm. An air stream containing 3.5% vol. of $SO_3$, corresponding to 90 g/h of $SO_3$, is passed through the mixture for 75 minutes. Temperature is then increased to 70°C and stirring to 1500 rpm and passing of the $SO_3$ containing stream is continued for further 45 minutes. A mixture is obtained consisting of :

- 75.9% wt. mono-sulphonated products;
- 0.7% wt. di-sulphonated products;
- 23.4% wt. 1,1,3-trimethyl-3-phenyl-indane,

and 37% aqueous formaldehyde (263 g) and 96% $H_2SO_4$ (12 g) are then added thereto. The mixture is heated, under stirring, to the reflux temperature for 5 hours, then it is neutralised by the addition of NaOH and diluted with water up to a concentration of 10% of the neutralised condensation product of. This solution is used as a suspending additive in the preparation of 70% coke-water slurries according to the procedure described in example 1.

Viscosity at a shear-rate of 100 $sec^{-1}$ is :

- 0,462 $Ns/m^2$cP for the slurry containing 0,5% of the suspending agent;
- 0,621 $Ns/m^2$ for the slurry containing 0,3% of the additive.

Example 5

Coal tendency to settle in the slurries of the preceding examples containing 0,5% by weight of additive, has been evaluated in comparison with slurries having the same composition and prepared by the same method but containing 0,5% by weight of a commercial product which is the sodium salt of the polycondensation product of naphtalenesulphonic acids with formaldehyde.

These tests have been performed as follows: a sample of each tested slurry is poured in a 150-mm graduated cylinder and allow to stand for a time "t", then it is rapidly cooled to a temperature below the freezing point; the upper 15-mm and the lower 15-mm sections of the small cylinder are then cut away and coal concentration in these sections is finally determined. The stability index (Is) at "t" time, can be expressed as

$$Is_t = C_s/C_i \times 100$$

wherein $C_s$ is the coal concentration in the upper 15-mm section and $C_i$ is the coal concentration in the lower 15-mm section.

When $C_s = C_i$, there is no settlement at the "t" time, the slurry is stable and $Is_t$ is 100. The more $Is_t$ differs from 100, the more unstable is the slurry.

Slurries containing the sodium salt of the polycondensation product from naphtalenesulphonic acids and formaldehyde, are characterised by an Is, after one day, which is already significantly lower than 100, while slurries prepared with the additives prepared in the foregoing examples still retain an Is comprised between 95 and 100 after one week.

## Claims

**1.** A process for the preparation of condensation products of sulphonated phenyl-indanes with formaldehyde which comprises reacting a sulphonated phenyl-indane of formula I

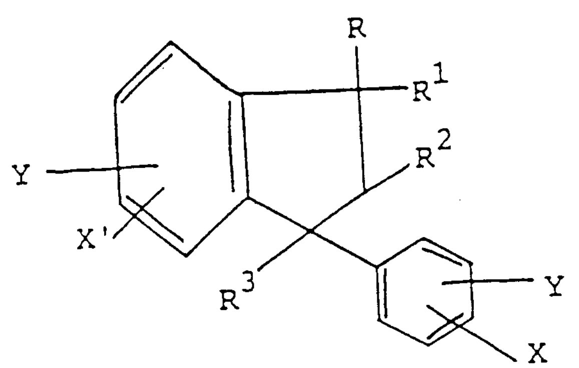

I

wherein

R, $R^1$ $R^2$ and $R^3$, each independently, represent a hydrogen atom or a $C_1$-$C_6$ alkyl radical,

Y represents a hydrogen atom, or a $C_1$-$C_6$ alkyl, $C_1$-$C_6$ alkoxy, halo, cyano, nitro, $-CF_3$, -COOH, or -COO ($C_1$-$C_6$ alkyl) radical, and

X and X', each independently, represent a hydrogen atom or a $-SO_3H$ group,
with the proviso that at least one of X and X' is a $-SO_3H$ group,
with formaldehyde or a formaldehyde donor in the presence of an inert solvent medium and of a mineral acid.

**2.** A process as in claim 1 wherein the two reactants are employed in equimolecular amounts.

**3.** A process as in claim 1 wherein the solvent is water.

**4.** A process as in claim 1 wherein the mineral acid is employed in amounts comprised between 0.1 and 20% by weight of the starting sulphonated phenyl-indane.

**5.** A process as in claim 4 wherein the mineral acid is used in amounts comprised between 0.1 and 10% by weight of the starting sulphonated phenyl-indane.

**6.** A process as in claim 1 wherein the mineral acid is selected from sulfuric acid, phosphoric acid and hydrochloric acid.

**7.** A process as in claim 6 wherein the mineral acid is sulfuric acid.

**8.** A process as in claim 3 wherein formaldehyde is added as an aqueous solution thereof.

**9.** A process as in claim 1 wherein the sulphonated phenyl-indane of formula I is obtained from the corresponding phenyl-indane derivative through sulphonation with diluted $SO_3$.

**10.** A process as in claim 9 wherein the mixture deriving from $SO_3$ sulphonation of the phenyl-indane is used, as such, as the starting material in the condensation with formaldehyde.

**11.** A product as designated in claim 1, obtainable through the process of any of the preceding claims.

**12.** A product as in claim 11 wherein one of X and X' is $-SO_3H$ and the other is a hydrogen atom.

**13.** A product as in claim 12 wherein R is methyl, and $R^1$, $R^2$, and $R^3$ are hydrogen.

**14.** A product as in claim 12 wherein R, $R^1$, and $R^3$ are methyl, and $R^2$ is hydrogen.

**15.** A product as in claim 13 or 14 wherein Y is hydrogen.

**16.** Fluidifying and stabilising additive for aqueous suspensions characterised in that it consists of a salt of the product of any of preceding claims 11 to 15 with an organic or inorganic base.

**17.** Additive as in claim 16 wherein the base is an alkali or alkaline-earth metal hydroxide or carbonate or ammonium hydroxide.

**18.** Additive according to claim 16 which is the sodium or ammonium salt of the condensation product of monosulphonated 1,1,3-trimethyl-3-phenyl-indane and formaldehyde.

**19.** Use of an additive according to any of preceding claims 16 to 18 to fluidify and stabilise the suspensions of solids in water or aqueous solutions.

**20.** Use of additive according to claim 19 where the additive is employed in amounts comprised between 0.2 and 2% by weight calculated on the weight of the suspension.

## Patentansprüche

**1.** Verfahren zur Herstellung von Kondensationsprodukten von sulfonierten Phenylindanen mit Formaldehyd, das umfaßt die Umsetzung eines sulfonierten Phenylindans der Formel (I)

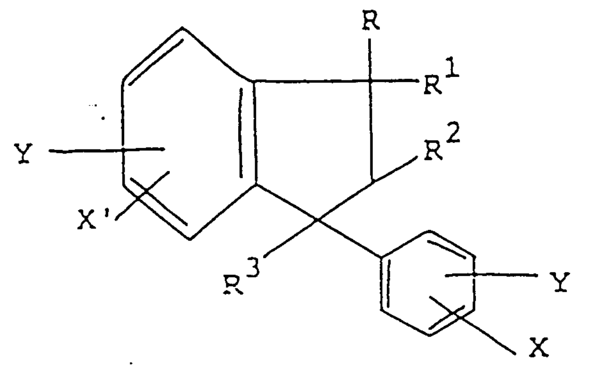

(I)

worin bedeuten:

| | |
|---|---|
| R, $R^1$, $R^2$ und $R^3$ | jeweils unabhängig voneinander ein Wasserstoffatom oder einen $C_1$-$C_6$-Alkylrest, |
| Y | ein Wasserstoffatom oder einen $C_1$-$C_6$-Alkyl-, $C_1$-$C_6$-Alkoxy-, Halogen-, Cyano-, Nitro-, $-CF_3$-, -COOH- oder -COO($C_1$-$C_6$-Alkyl)-Rest und |
| X und X' | unabhängig voneinander jeweils ein Wasserstoffatom oder eine $SO_3H$-Gruppe, mit der Maßgabe, daß mindestens einer der Reste X und X' eine $-SO_3H$-Gruppe darstellt, |

mit Formaldehyd oder einem Formaldehyd-Donor in Gegenwart eines inerten Lösungsmittelmediums und einer Mineralsäure.

**2.** Verfahren nach Anspruch 1, worin die beiden Reaktanten in äquimolaren Mengen verwendet werden.

**3.** Verfahren nach Anspruch 1, worin das Lösungsmittel Wasser ist.

**4.** Verfahren nach Anspruch 1, worin die Mineralsäure in Mengen zwischen 0,1 und 20 Gew.-% des sulfonierten Phenylindan-Ausgangsmaterials verwendet wird.

**5.** Verfahren nach Anspruch 4, worin die Mineralsäure in Mengen zwischen 0,1 und 10 Gew.-% des sulfonierten Phenylindan-Ausgangsmaterials verwendet wird.

**6.** Verfahren nach Anspruch 1, worin die Mineralsäure ausgewählt wird aus Schwefelsäure, Phosphorsäure und Chlorwasserstoffsäure.

**7.** Verfahren nach Anspruch 6, worin die Mineralsäure Schwefelsäure ist.

**8.** Verfahren nach Anspruch 3, worin der Formaldehyd in Form einer wäßrigen Lösung desselben zugegeben wird.

**9.** Verfahren nach Anspruch 1, worin das sulfonierte Phenylindan der Formel (I) aus dem entsprechenden Phenylindanderivat durch Sulfonierung mit verdünntem $SO_3$ erhalten wird.

**10.** Verfahren nach Anspruch 9, worin das bei der $SO_3$-Sulfonierung des Phenylindans erhaltene Gemisch als solches als Ausgangsmaterial für die Kondensation mit Formaldehyd verwendet wird.

**11.** Produkt nach Anspruch 1, wie es nach dem Verfahren nach einem der vorhergehenden Ansprüche erhältlich ist.

**12.** Produkt nach Anspruch 11, worin einer der Reste X und X' $-SO_3H$ und der andere ein Wasserstoffatom bedeuten.

**13.** Produkt nach Anspruch 12, worin R Methyl und $R^1$, $R^2$ und $R^3$ Wasserstoff bedeuten.

**14.** Produkt nach Anspruch 12, worin R, $R^1$ und $R^3$ Methyl und $R^2$ Wasserstoff bedeuten.

**15.** Produkt nach Anspruch 13 oder 14, worin Y Wasserstoff bedeutet.

**16.** Fluidisierungs- (Verflüssigungs-) und Stabilisierungs-Zusatz (-Additiv) für wäßrige Suspensionen, dadurch gekennzeichnet, daß er (es) besteht aus einem Salz des Produkts nach einem der vorhergehenden Ansprüche 11 bis 15 mit einer organischen oder anorganischen Base.

**17.** Zusatz nach Anspruch 16, worin die Base ein Alkalimetall- oder Erdalkalimetallhydroxid oder -carbonat oder Ammoniumhydroxid ist.

**18.** Zusatz nach Anspruch 16, der das Natrium- oder Ammoniumsalz des Kondensationsprodukts von monosulfoniertem 1,1,3-Trimethyl-3-phenylindan und Formaldehyd ist.

**19.** Verwendung eines Zusatzes (Additivs) nach einem der vorhergehenden Ansprüche 16 bis 18 zum Fluidisieren (Verflüssigen) und Stabilisieren der Suspensionen von Feststoffen in Wasser oder wäßrigen Lösungen.

**20.** Verwendung des Zusatzes (Additivs) nach Anspruch 19, bei der der Zusatz (das Additiv) in Mengen zwischen 0,2 und 2 Gew.-%, bezogen auf das Gewicht der Suspension, verwendet wird.

## Revendications

**1.** Procédé de préparation de produits de condensation de phényl-indanes sulfonés avec le formaldéhyde, qui comprend la réaction d'un phényl-indane sulfoné de formule I

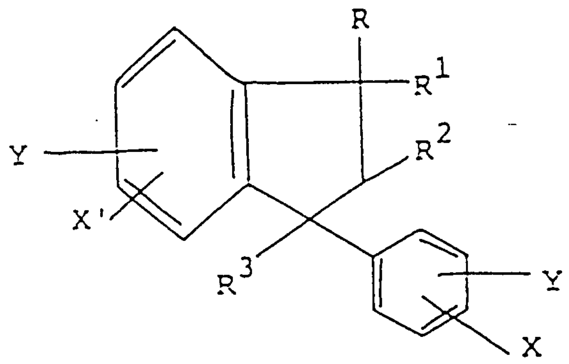

I

où
R, $R^1$, $R^2$ et $R^3$, indépendamment l'un de l'autre, représentent un atome d'hydrogène ou un radical $C_1$-$C_6$ alkyle,
Y représente un atome d'hydrogène, un $C_1$-$C_6$ alkyle, $C_1$-$C_6$ alcoxy, un halogène, un radical cyano, nitro, $-CF_3$, -COOH ou -COO($C_1$-$C_6$ alkyle), et
X et X', indépendamment l'un de l'autre, représentent un atome d'hydrogène ou un groupe $-SO_3H$,
avec la condition qu'au moins l'un de X et de X' soit un groupe $-SO_3H$,
avec le formaldéhyde ou un donneur de formaldéhyde, en présence d'un milieu solvant inerte et d'un acide minéral.

**2.** Procédé selon la revendication 1, où les deux réactifs sont utilisés en quantités équimoléculaires.

**3.** Procédé selon la revendication 1, où le solvant est l'eau.

**4.** Procédé selon la revendication 1, où l'acide minéral est utilisé en des quantités comprises entre 0,1 et 20 % en poids par rapport au phényl-indane sulfoné de départ.

**5.** Procédé selon la revendication 4, où l'acide minéral est utilisé en des quantités comprises entre 0,1 et 10 % en poids par rapport au phényl-indane sulfoné de départ.

6. Procédé selon la revendication 1, où l'acide minéral est choisi parmi l'acide sulfurique, l'acide phosphorique et l'acide chlorhydrique.

7. Procédé selon la revendication 6, où l'acide minéral est l'acide sulfurique.

8. Procédé selon la revendication 3, où le formaldéhyde est ajouté sous forme d'une solution aqueuse.

9. Procédé selon la revendication 1, où le phényl-indane sulfoné de formule I est obtenu à partir du dérivé phényl-indane correspondant par sulfonation avec $SO_3$ dilué.

10. Procédé selon la revendication 9, où le mélange provenant de la sulfonation par $SO_3$ du phényl-indane est utilisé, tel quel, comme matière de départ dans la condensation avec le formaldéhyde.

11. Produit tel que désigné dans la revendication 1, pouvant être obtenu par un procédé selon l'une quelconque des revendications précédentes.

12. Produit selon la revendication 11, où l'un de X et de X' est $-SO_3H$ et l'autre est un atome d'hydrogène.

13. Produit selon la revendication 12, où R est méthyle, et $R^1$, $R^2$ et $R^3$ sont de l'hydrogène.

14. Produit selon la revendication 12, où R, $R^1$ et $R^3$ sont méthyle, et $R^2$ est hydrogène.

15. Produit selon la revendication 13 ou 14, où Y est hydrogène.

16. Additif fluidifiant et stabilisant pour suspensions aqueuses, caractérisé par le fait qu'il est constitué du sel d'un produit de l'une quelconque des revendications 11 à 15 avec une base organique ou minérale.

17. Additif selon la revendication 16, où la base est un hydroxyde de métal alcalin ou alcalino-terreux ou un carbonate de métal alcalin ou alcalino-terreux ou l'hydroxyde d'ammonium.

18. Additif selon la revendication 16, qui est le sel de sodium ou d'ammonium du produit de condensation de 1,1,3-triméthyl-3-phényl-indane sulfoné et du formaldéhyde.

19. Utilisation d'un additif selon l'une quelconque des revendications 16 à 18, pour fluidifier et stabiliser les suspensions de solides dans l'eau ou les solutions aqueuses.

20. Utilisation d'un additif selon la revendication 19, où l'additif est utilisé dans des quantités comprises entre 0,2 et 2 % en poids par rapport au poids de la suspension.